# EUROPÄISCHE PATENTSCHRIFT

(11) **EP 3 095 678 B1**
(45) Veröffentlichungstag und Bekanntmachung des Hinweises auf die Patenterteilung: **12.09.2018**
(21) Anmeldenummer: 16169302.3
(22) Anmeldetag: 12.05.2016
(51) Int. Cl.: B62D 25/06, B62D 63/02

(54) **VERFAHREN ZUR HERSTELLUNG EINER KAROSSERIESTRUKTUR FÜR EIN ZWEISPURIGES FAHRZEUG**
METHOD FOR PRODUCING A BODY STRUCTURE FOR A DOUBLE-TRACK VEHICLE
PROCEDE DE FABRICATION D'UNE STRUCTURE DE CARROSSERIE POUR UN VEHICULE A DEUX VOIES

(30) Priorität: 22.05.2015 DE 102015209549
(43) Veröffentlichungstag der Anmeldung: 23.11.2016
(73) Patentinhaber: Volkswagen Aktiengesellschaft, 38440 Wolfsburg (DE)
(72) Erfinder: Pilz, Alexander, 38518 Gifhorn (DE)

(56) Entgegenhaltungen:
- EP-A1- 0 780 282
- WO-A1-2009/019970
- DE-A1- 19 860 794
- DE-A1-102004 016 849

## Beschreibung

Die Erfindung betrifft ein Verfahren zur Herstellung einer Karosseriestruktur für ein zweispuriges Fahrzeug nach dem Oberbegriff des Patentanspruches 1.

Ein Fahrzeug kann rein exemplarisch frontseitig eine Einzel- oder Doppelkabine aufweisen, die über eine Rückwand von einem heckseitigen Laderaum abgetrennt ist. Je nach Anwendungsfall kann das Fahrzeug heckseitig geschlossene Aufbauten (das heißt einen geschlossenen Laderaum) oder offene Aufbauten (das heißt einen offenen Laderaum) aufweisen, wie es bei einem Pritschenwagen mit heckseitig offener Ladefläche der Fall ist. Das Fahrzeug-Dachblech kann daher - je nach Fahrzeug-Ausführungsvariante - nur auf die Einzel- oder Doppelkabine beschränkt sein oder bei geschlossenen heckseitigen Aufbauten bis in den heckseitigen Laderaum verlängert sein. Das Dachblech kann dabei in der Fahrzeuglängsrichtung betrachtet aus voneinander separaten Dachblech-Segmenten zusammengesetzt sein.

In einer Karosseriestruktur ist das Dachblech in der Fahrzeugquerrichtung seitlich durch seitliche Dachrahmen begrenzt. Das Dachblech weist in einer Fahrzeug-Basisausstattung ein an die Windschutzscheibe angrenzendes vorderes Dachblech-Segment sowie zusätzlich ein daran in der Fahrzeuglängsrichtung nach hinten anschließendes weiteres Dachblech-Segment auf. In einer Fahrzeug-Zusatzausstattung kann dagegen das Dachblech nur eine reduzierte Anzahl von Segmenten, gegebenenfalls nur das vordere Dachblech-Segment aufweisen.

Das vordere Dachblech-Segment ist sowohl bei Fahrzeugen mit offenen Aufbauten als auch mit geschlossenen Aufbauten mit dem seitlichen Dachrahmen verschweißt. Bei einer Fahrzeug-Basisausstattung mit offenen Aufbauten ist die Karosseriestruktur nur über ein in der Fahrzeuglängsrichtung reduziertes Längsmaß geschlossen, das heißt nur im Bereich der Einzel-/Doppelkabine oberseitig geschlossen. Der geschlossene Karosseriebereich ist daher vergleichsweise kurz, so dass er beim Schweißprozess für eine robotergestützte Punktschweißzange oder eine manuell bedienbare Punktschweißzange fertigungstechnisch einfach zugänglich ist. In diesem Fall bietet sich als Füge-/Schweißtechnik zum Verschweißen des Dachblech-Vordersegmentes mit dem seitlichen Dachrahmen ein kostengünstiges Punktschweißverfahren an. Die Anschlusskontur des Dachblech-Vordersegments ist hierbei den Erfordernissen einer Punktschweißverbindung anzupassen.

Im Unterschied dazu kann bei Fahrzeugen mit geschlossenen Aufbauten die Karosseriestruktur über ein wesentlich größeres Längsmaß in der Fahrzeuglängsrichtung geschlossen ausgeführt sein (verblechte Versionen). In einer solchen Fertigungssituation ist eine robotergestützte Punktschweißzange nur mit großem fertigungstechnischen Aufwand zugänglich. Um den fertigungstechnischen Aufwand zu reduzieren, bietet sich hier als Schweißtechnik ein kostspieligeres Laserschweiß- oder Laserlötverfahren an, mittels dem auch geschlossene Karosseriestrukturen einwandfrei verschweißbar sind. In diesem Fall ist die Anschlusskontur des Dachblech-Vordersegmentes geometrisch den Erfordernissen einer Laserschweiß- oder Laserlötverbindung anzupassen.

Bei der Herstellung von Fahrzeugen unterschiedlicher Ausstattungen, das heißt mit offenen oder geschlossenen Aufbauten, sind daher geometrisch unterschiedliche Dachblech-Vordersegmente in bauteilaufwendiger Weise vorzuhalten. Zudem sind zur Herstellung der geometrisch unterschiedlichen Vordersegmente unterschiedliche Umformwerkzeuge erforderlich, was mit entsprechend hohen Werkzeugkosten verbunden ist.

Aus der DE 100 48 233 A1 ist ein Verfahren zum Verbinden von Blechen, insbesondere Karosserieblechen im Automobilbau bekannt. In diesem Verfahren werden die Blechteile vor dem Laserschweißen zunächst mittels Punktschweißen im Flanschbereich fixiert. Aus der DE 10 2004 005 568 A1 ist ein Verbindungsbereich auf einem Bauteil bekannt, der eine lokal begrenzte Einprägung aufweist, im Bereich derer die Bauteil-Materialstärke reduziert ist.

Aus der WO 2009/019970 A1 ist eine Karosseriestruktur für ein zweispuriges Fahrzeug bekannt. Die Karosseriestruktur weist einen, ein Dachblech in der Fahrzeugquerrichtung seitlich begrenzenden seitlichen Dachrahmen auf. Das Dachblech weist ein in der Fahrzeuglängsrichtung vorderes Dachblech-Segment auf. Aus der DE 198 60 794 A1 ist ein gattungsgemäßes Verfahren zur Herstellung einer Mehrzahl von Bauvarianten einer Karosseriestruktur für ein zweispuriges Fahrzeug bekannt. Die Karosseriestruktur weist einen, ein Dachblech in der Fahrzeugquerrichtung seitlich begrenzenden seitlichen Dachrahmen auf.

Die Aufgabe der Erfindung besteht darin, ein Verfahren zur Herstellung einer Karosseriestruktur für ein zweispuriges Fahrzeug bereitzustellen, bei dem das Fahrzeug in unterschiedlichen Ausstattungen in einfacher sowie kostengünstiger Weise herstellbar ist.

Die Aufgabe ist durch die Merkmale des Patentanspruches 1 gelöst. Bevorzugte Weiterbildungen der Erfindung sind in den abhängigen Ansprüchen offenbart.

Die Erfindung beruht auf der Problematik, dass im oben angegebenen Stand der Technik für unterschiedliche Ausstattungsvarianten unterschiedliche Dachblech-Vordersegmente vorzuhalten sind. Vor diesem Hintergrund ist gemäß dem kennzeichnenden Teil des Patentanspruches 1 das Dachblech-Vordersegment so ausgebildet, dass es sowohl für den Verbau in einer Fahrzeug-Basisausstattung (zum Beispiel einem Fahrzeug mit geschlossenem Aufbau) als auch für den Verbau in einer Fahrzeug-Zusatzausstattung (zum Beispiel einem Fahrzeug mit offenem Aufbau) ausbildbar ist.

In einer technischen Umsetzung ist das Vordersegment für den Verbau in der Fahrzeug-Basisausstattung mit einer Basis-Anschlusskontur ausgebildet, mit der eine einwandfreie Anbindung an den seitlichen Dachrahmen mittels einer Basis-Fügetechnik (zum Beispiel dem Laserschweißen/Laserlöten) ermöglicht ist. Zudem ist das Vordersegment für den Verbau in der Fahrzeug-Zusatzausstattung (zum Beispiel ein Fahrzeug mit offenen Aufbauten) mit einer Zusatz-Anschlusskontur ausgebildet, mit der eine einwandfreie Anbindung an den seitlichen Dachrahmen mittels der Zusatz-Fügetechnik (zum Beispiel einem Punktschweißen) ermöglicht ist.

In einer ersten Ausführungsvariante kann die Basis-Anschlusskontur und die Zusatz-Anschlußkontur in einer Prozessabfolge zeitlich hintereinander im Dachblech-Vordersegment ausgebildet werden. In einer zweiten Ausführungsvariante kann sowohl die Basis-Anschlusskontur als auch die Zusatz-Anschlusskontur gleichzeitig im Dachblech-Vordersegment ausgebildet werden.

Im Hinblick auf eine ausreichend steife Karosseriestruktur kann der seitliche Dachrahmen ein Hohlprofilträger sein, der aus schalenförmigen Blech-Seitenteilen gebildet ist. Deren Randflansche sind zu einer Flanschverbindung zusammengefügt, an der das oben erwähnte Dachblech-Vordersegment anbindbar ist, und zwar je nach Ausstattung mittels der Basis-Fügetechnik oder der Zusatz-Fügetechnik.

Nachfolgend sind die weiteren Erfindungsaspekte zum einfacheren Verständnis für einen Anwendungsfall beschrieben, bei dem die erste Fügetechnik ein Laserschweißen -oder löten ist und die zweite Fügetechnik ein Punktschweißen ist. Es versteht sich jedoch, dass die Erfindung nicht auf die bevorzugten Laser- und Punktschweißverfahren beschränkt ist, sondern vielmehr allgemein auf jegliche Arten von Fügetechniken anwendbar ist.

So kann in einer konkreten Anbindungsgeometrie das Vordersegment in der Fahrzeugquerrichtung nach fahrzeugaußen in eine abgewinkelte Seitenflanke übergehen, an die sich an einer Übergangskante ein Randflansch nach Fahrzeugaußen anschließt. Dieser Vordersegment-Randflansch bildet entweder die Basis-Anschlusskontur zum Laserschweißen/Laserlöten oder die Zusatz-Anschlusskontur zum Punktschweißen. Auf diese Weise wird der Vordersegment-Randflansch durch Laserschweißen oder durch Punktschweißen auf eine ebenflächige, im Wesentlichen horizontale Anbindungsfläche der trägerseitigen Flanschverbindung des seitlichen Dachrahmens aufgeschweißt.

Wie oben erwähnt, kann das Fahrzeug in einer Basisausstattung geschlossene Aufbauten aufweisen. In diesem Fall wird aus fertigungstechnischen Gründen das Laserschweißen/Laserlöten angewendet. Entsprechend kann zur Bildung der Basis-Anschlusskontur der Vordersegment-Randflansch schräggestellt sein, und zwar unter Bildung eines im Querschnitt keilförmigen Hohlraum zwischen der trägerseitigen Flanschverbindung und dem Vordersegment-Randflansch, dessen Raumhöhe nach Fahrzeuginnen ansteigt. Dieser keilförmige Hohlraum bildet eine beim Laserschweißen (insbesondere mit verzinkten Blechteilen) erforderliche Entgasungsöffnung bzw. ermöglicht einen Linienkontakt zur Abstimmung der toleranzempfindlichen Laserlötung, mit der die Prozesssicherheit in der Serienfertigung gewährleistet ist. Der Vordersegment-Randflansch ist daher mit seiner Basis-Anschlusskontur lediglich mit seiner fahrzeugäußeren Beschnittkante in Laserverbindung mit der trägerseitigen Flanschverbindung.

Beim Verschweißen des Dachblech-Vordersegmentes in einem Fahrzeug mit Zusatzausstattung (das heißt ein Fahrzeug mit offenen Aufbauten oder auch an anderen Produktionsstandorten mit abweichendem Fügeequipment) ist der Vordersegment-Randflansch mit einer Zusatz-Anschlusskontur ausgebildet, bei der eine für das Punktschweißen erforderliche vollflächige Anlage zur Anbindungsfläche der trägerseitigen Flanschverbindung erforderlich ist.

In der obigen Ausführungsform kann somit bei der Fertigung des Dachblech-Vordersegmentes für die Fahrzeug-Grundausstattung und des Dachblech-Vordersegmentes für die Fahrzeug-Zusatzausstattung ein gemeinsames Blechteil vorgehalten werden. Das gemeinsame Blechteil kann in der weiteren Prozessfolge in Doppelnutzung bedarfsweise für die Fahrzeug-Grundausstattung oder für die Fahrzeug-Zusatzausstattung verwendet werden.

Das oben erwähnte gemeinsame Blechteil kann für den Verbau in der Fahrzeug-Basisausstattung einem Basis-Prozessschritt unterworfen werden, in dem die Basis-Anschlusskontur des Vordersegmentes geformt wird. Zudem kann das gemeinsame Blechteil für den Verbau in der Fahrzeug-Zusatzausstattung einem Zusatz-Prozessschritt unterworfen werden, in dem die Zusatz-Anschlusskontur des Vordersegmentes geformt wird. Bevorzugt ist der Zusatz-Prozessschritt in einer Prozessabfolge unmittelbar dem Basis-Prozessschritt zeitlich nachgeschaltet.

In der obigen Prozessabfolge ist somit der Vordersegment-Randflansch entweder mit der Basis-Anschlusskontur oder (durch die darauffolgende Ausführung des Zusatz-Prozessschritts) mit der Basis-Anschlusskontur versehen. Alternativ dazu kann in einer weiteren Ausführungsform die Basis-Anschlusskontur und die Zusatz-Anschlusskontur gemeinsam im Vordersegment-Randflansch ausgebildet sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1 und 2: ein Fahrzeug in unterschiedlichen Ansichten in einer Fahrzeug-Basisausstattung;
- Fig. 3: eine Teilschnittdarstellung entlang der Schnittebene A-A;
- Fig. 4 und 5: ein Fahrzeug in einer Fahrzeug-Zusatzausstattung;
- Fig. 6: eine Teilschnittdarstellung entlang der Schnittebene B-B aus den Fig. 4 und 5;
- Fig. 7 bis 9: jeweils Ansichten, die die Prozessschritte zur Anpassung des DachblechVordersegmentes für den Verbau in einer Fahrzeug-Basisausstattung und für den Verbau in einer Fahrzeug-Zusatzausstattung veranschaulichen;
- Fig. 10: in einer Teilansicht von oben eine Anbindungsstelle zwischen dem Vordersegment und dem seitlichen Dachrahmen in einer FahrzeugBasisausstattung gemäß einem zweiten Ausführungsbeispiel;
- Fig. 11: eine Teilschnittansicht entlang der Schnittebene D-D aus der Fig. 10
- Fig. 12: eine Ansicht entsprechend der Fig. 10 in einer Fahrzeug-Zusatzausstattung; und
- Fig. 13: eine Teilschnittansicht entlang der Schnittebene C-C aus der Fig. 12.

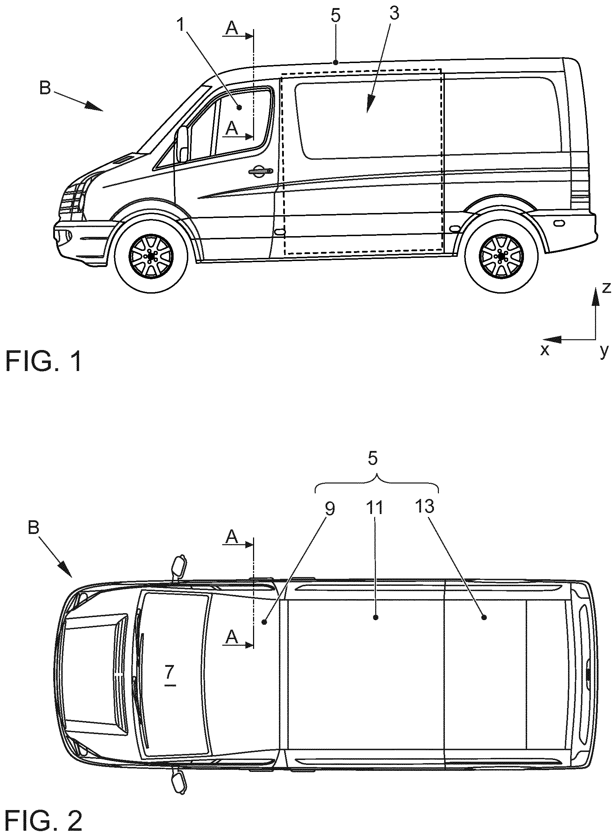

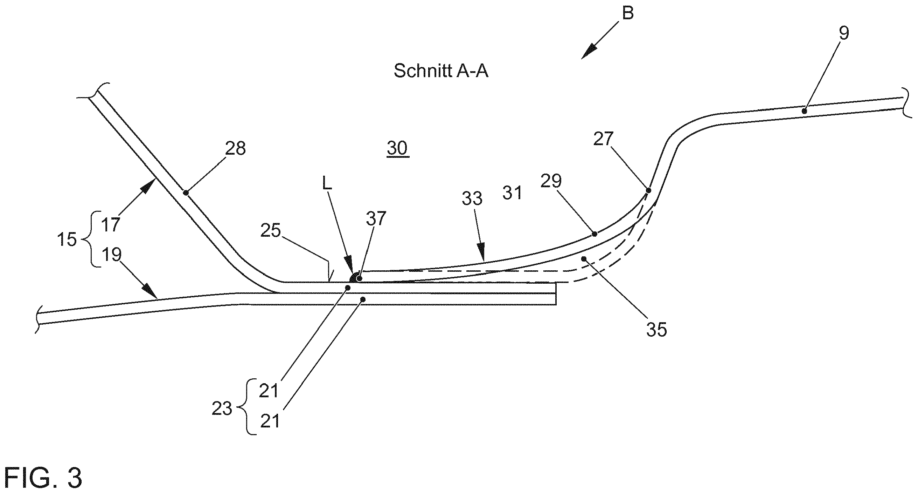

In den Fig. 1 und 2 ist ein Fahrzeug in einer Basisausstattung B gezeigt. Exemplarisch weisen die in der Basisausstattung B ausgeführten Fahrzeuge heckseitig geschlossene Aufbauten auf. Das heißt, dass der über eine Rückwand von der Fahrerkabine 1 abgetrennte Laderaum 3 geschlossen ausgeführt ist. In der Fig. 2 ist somit nicht nur die Fahrerkabine 1, sondern auch der Laderaum 3 mit einem Dachblech 5 überdeckt. Zudem ist das Dachblech 5 in der Fahrzeuglängsrichtung x betrachtet aufgeteilt in insgesamt exemplarisch drei Dachblech-Segmente, nämlich ein an die Windschutzscheibe 7 grenzendes Dachblech-Vordersegment 9, ein Dachblech-Mittelsegment 11 sowie ein Dachblech-Hecksegment 13. Das vordere Dachblech-Segment 9 ist in der Fahrzeugquerrichtung y randseitig mit einem seitlichen Dachrahmen 15 (Fig. 3) verschweißt.

Die Schweiß-Anbindung des Vordersegmentes 9 am seitlichen Dachrahmen 15 ist in der Fig. 3 gezeigt. Gemäß der Fig. 3 ist der seitliche Dachrahmen 15 ein Hohlprofilträger, der aus schalenförmigen Blech-Seitenteilen 17, 19 gebildet ist. Deren Randflansche 21 sind zu einer Flanschverbindung 23 zusammengefügt, die oberseitig eine ebenflächige, im Wesentlichen horizontale Anbindungsfläche 25 bereitstellt, auf der das Vordersegment 9 abgestützt ist. Das Vordersegment 9 geht in der Fahrzeugquerrichtung y nach außen in eine abgewinkelte Seitenflanke 27 über, an die sich an einer Übergangskante 29 nach fahrzeugaußen ein Vordersegment-Randflansch 31 anschließt. In der Fahrzeug-Basisausstattung B ist der Vordersegment-Randflansch 31 durch Laserschweißen mit der Anbindungsfläche 25 des seitlichen Dachrahmens 15 verschweißt. Entsprechend weist der Vordersegment-Randflansch 31 eine Laserschweiß-Anschlusskontur 33 auf, bei der der Vordersegment-Randflansch 31 schräggestellt ist, und zwar unter Bildung eines im Querschnitt keilförmigen Hohlraums 35 zwischen der Anbindungsfläche 25 und dem Vordersegment-Randflansch 31, dessen Raumhöhe nach fahrzeuginnen ansteigt. Der Hohlraum 35 bildet eine beim Laserschweißen prozesstechnisch erforderlich Entgasungsöffnung aus. Auf diese Weise ist der Vordersegment-Randflansch 31 lediglich mit seiner fahrzeugäußeren Beschnittkante 37 in Laserschweißverbindung L mit dem seitlichen Dachrahmen 15.

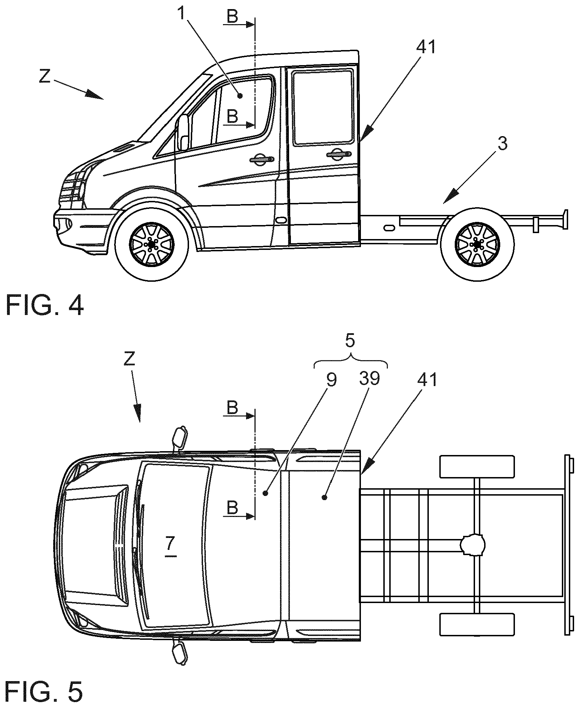

In Abgrenzung zu den Fig. 1 bis 3 ist in den Fig. 4 bis 6 das Fahrzeug in einer Fahrzeug-Zusatzausstattung Z gezeigt, bei der die Fahrzeuge heckseitig offene Aufbauten aufweisen, zum Beispiel eine in den Fig. 4 bis 5 nicht gezeigte offene Ladefläche. Entsprechend ist in den Fig. 4 und 5 lediglich die Fahrerkabine 1, die in diesem Fall eine Doppelkabine ist, mit dem Dachblech-Vordersegment 9 sowie einem weiteren Segment 39 überdacht. Das weitere Segment 39 geht in Fahrzeuglängsrichtung x nach hinten in eine Rückwand 41 über, die die Fahrerkabine 1 vom heckseitigen offenen Aufbau abtrennt.

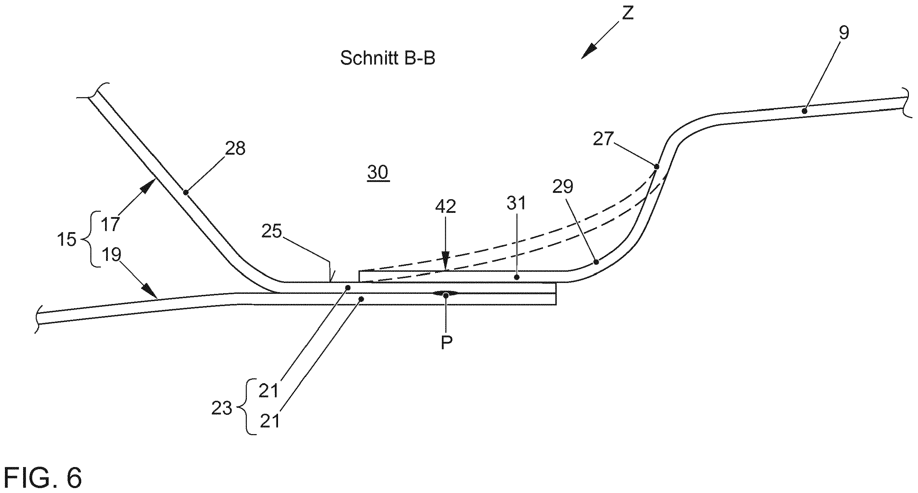

In der Fig. 6 ist die Anbindung des Dachblech-Vordersegments 9 am seitlichen Dachrahmen 15 gezeigt. Die Seitenflanke 27 begrenzt zusammen mit einer in Fahrzeugquerrichtung y außen liegenden Seitenflanke 28 des oberen seitlichen Blechteils 17 des seitlichen Dachrahmens 15 einen längsverlaufenden Dachkanal 30.

In der Fahrzeug-Zusatzausstattung Z gemäß den Fig. 4 bis 6 ist das Dachblech-Vordersegment 9 nicht mehr durch Laserschweißen L am seitlichen Dachrahmen 15 angebunden, sondern vielmehr durch eine Punktschweißverbindung P. Entsprechend ist der Vordersegment-Randflansch 31 nicht mehr mit einer Laserschweiß-Anschlußkontur 33, sondern mit einer Punktschweiß-Anschlusskontur 42 versehen. In der Punktschweiß-Anschlußkontur 42 ist der Randflansch 31 nicht mehr schräggestellt, sondern vielmehr vollflächig in Anlageverbindung mit der Anbindungsfläche 25 des seitlichen Dachrahmens 15. Demgegenüber ist in der Fig. 6 in gestrichelten Linien die Laserschweiß-Anschlusskontur 33 angedeutet.

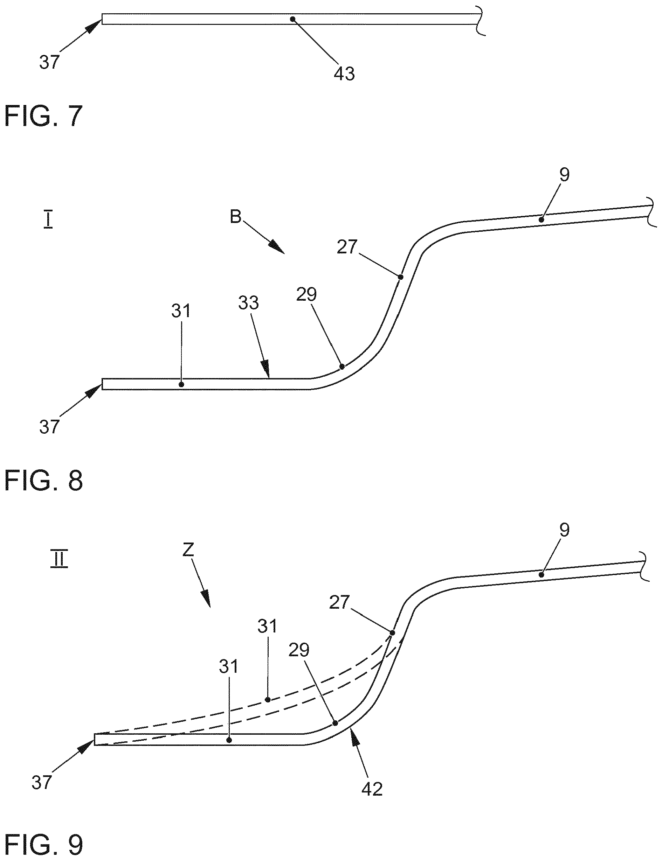

Der Kern der Erfindung besteht darin, dass sowohl für den Verbau des Dachblech-Vordersegmentes 9 in der Fahrzeug-Basisausstattung B (Fig. 1 bis 3) als auch für den Verbau in der Fahrzeug-Zusatzausstattung Z (Fig. 4 bis 6) ein gemeinsames Dachblech-Vordersegment 9 verwendbar ist. Beim Zusammenbau der Karosseriestruktur ist dabei zur Fertigung des Dachblech-Vordersegments 9 sowohl für die Basisausstattung B als auch für die Zusatzausstattung Z nur ein gemeinsames Blechteil 43 (Fig. 7) vorzuhalten, das in Doppelnutzung bedarfsweise für die Basisausstattung B (Fig. 8) oder für die Zusatzausstattung Z (Fig. 9) in einem Werkzeugsatz geformt werden kann. Das gemeinsame Blechteil 43 ist in der Fig. 7 noch als eine unverformte oder nur vorgeformte ebenflächige Blechplatine dargestellt. Für den Verbau in der Fahrzeug-Basisausstattung B (Fig. 1 bis 3) wird das Blechteil 43 einem Basis-Prozessschritt I unterworfen. Im Prozessschritt I wird die Laserschweiß-Anschlusskontur 33 des Vordersegments 9 ausgebildet.

Für den Fall, dass das gemeinsame Blechteil 43 ein Dachblech-Vordersegment 9 für den Verbau in der Fahrzeug-Zusatzausstattung Z bilden soll, erfolgt zeitlich nachgeschaltet ein Zusatz-Prozessschritt II, bei dem die Laserschweiß-Anschlusskontur 33 in die Punktschweiß-Anschlusskontur 42 umgeformt wird.

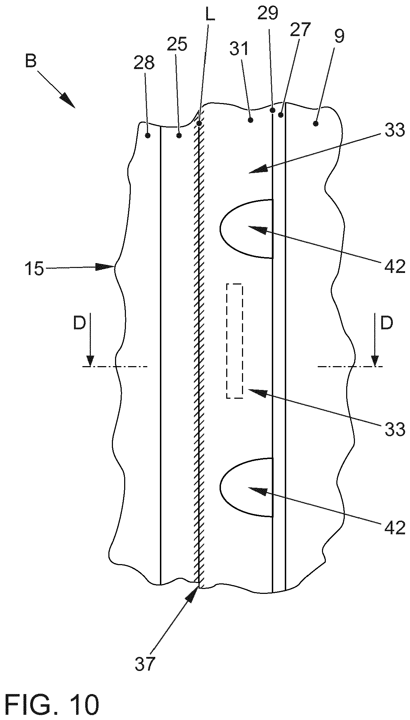

In den Fig. 10 bis 13 ist ein zweites Ausführungsbeispiel der Erfindung gezeigt, das in großen Teilen identisch wie das vorangegangene erste Ausführungsbeispiel aufgebaut ist. Insoweit wird auf die Beschreibung des ersten Ausführungsbeispiels verwiesen.

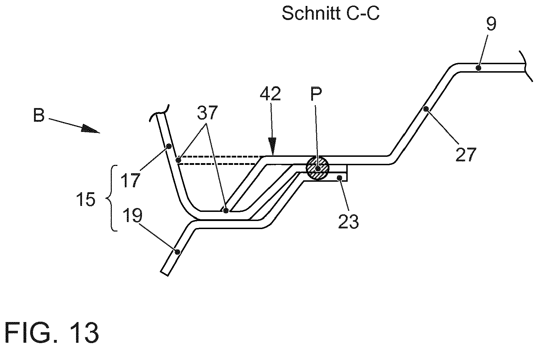

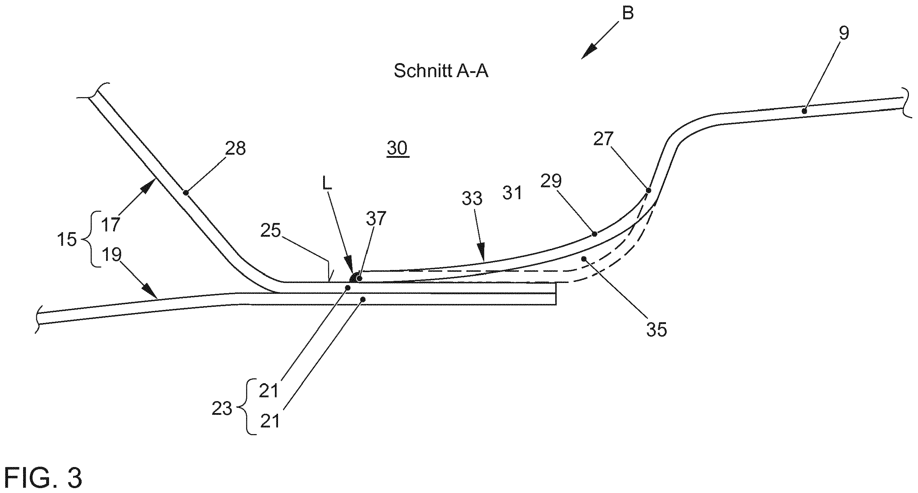

Im Unterschied zu den Fig. 1 bis 9 sind in den Fig. 10 bis 13 die Laserschweiß-Anschlusskontur 33 und die Punktschweiß-Anschlußkontur 42 nicht in einer Prozessabfolge zeitlich hintereinander im Dachblech-Vordersegment 9 ausbildbar, sondern sind sowohl die Laserschweiß-Anschlusskonturen 33 als auch die Punktschweiß-Anschlusskonturen 42 gleichzeitig im Randflansch 31 des Vordersegments 9 ausgebildet, und zwar in der Fahrzeuglängsrichtung x betrachtet alternierend hintereinander, wie es in den Fig. 10 und 13 gezeigt ist.

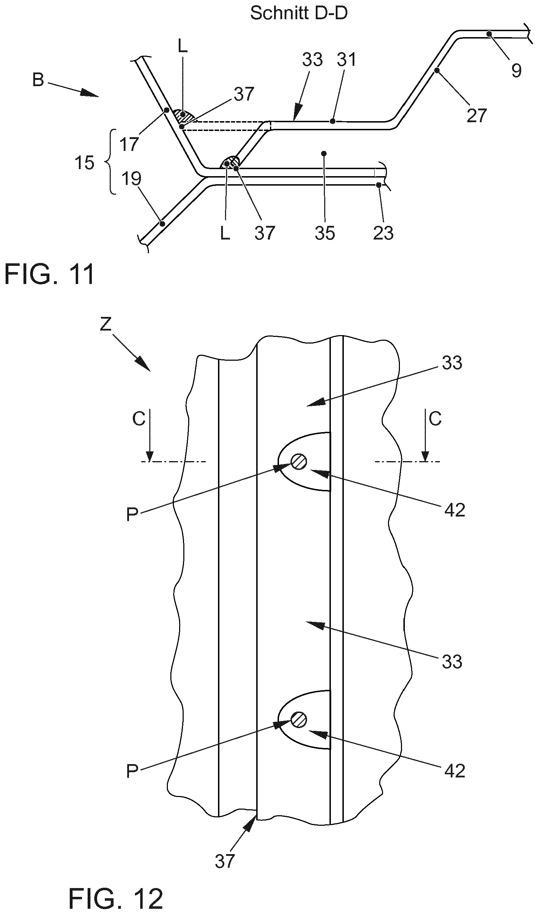

In der Fig. 10 und 11 ist exemplarisch eine Fahrzeug-Basisausstattung B angedeutet, in der die Laserschweiß-Anschlusskontur 33 (d.h. die Beschnittkante 37, in zwei möglichen Ausführungen gezeigt) des Randflansches 31 des Dachblech-Vordersegments 9 in einer Laserschweißverbindung L mit der Flanschverbindung 23 des seitlichen Dachrahmens 15 ist. Die Punktschweiß-Anschlusskonturen 42 sind in der Fig. 10 ggf. als gestrichelt angedeutete Klebverbindungen auszuführen.

In der Fig. 12 und 13 ist exemplarisch eine Fahrzeug-Zusatzausstattung Z angedeutet, in der die Laserschweiß-Anschlusskonturen 33 (d.h. die Beschnittkante 37, in zwei möglichen Ausführungen gezeigt) des Randflansches 31 des Dachblech-Vordersegments 9 nicht in Laserschweißverbindung L mit der Flanschverbindung 23 des seitlichen Dachrahmens 15 sind, sondern funktionslos sind. Vielmehr sind in der Fig. 12 und 13 die Punktschweiß-Anschlusskonturen 42 des Randflansches 31 des Dachblech-Vordersegments 9 in Punktschweißverbindung P mit der Flanschverbindung 23 des seitlichen Dachrahmens 15. Bei groß gewählten Schweißpunktabständen kann ggf. eine in der Fig. 12 gestrichelt angedeutete Abstützklebung zwischen den Schweißpunkten eingesetzt werden.

## Patentansprüche

1. Verfahren zur Herstellung einer Mehrzahl von Bauvarianten einer Karosseriestruktur für ein zweispuriges Fahrzeug, mit zumindest einen, ein Dachblech (5) in der Fahrzeugquerrichtung (y) seitlich begrenzenden seitlichen Dachrahmen (15), welches Dachblech (5) in einer Fahrzeug-Basisausstattung (B) zumindest ein in der Fahrzeuglängsrichtung (x) vorderes Dachblech-Segment (9) aufweist und in einer Fahrzeug-Zusatzausstattung (Z) zusätzlich zumindest ein daran in der Fahrzeuglängsrichtung (x) nach hinten anschließendes weiteres Dachblech-Segment (11, 13, 39) aufweist, wobei zur Fertigung des Dachblech-Vordersegments (9) für die Fahrzeug-Basisausstattung (B) und des Dachblech-Vordersegments (9) für die Fahrzeug-Zusatzausstattung (Z) ein gemeinsames Blechteil (43) vorgehalten wird, das in Doppelnutzung bedarfsweise für die Fahrzeug-Basisausstattung (B) oder für die Fahrzeug-Zusatzausstattung (Z) verwendet wird, **dadurch gekennzeichnet, dass** das Dachblech-Vordersegment (9) in der Fahrzeug-Basisausstattung (B) mittels einer Basis-Fügetechnik (L) an den seitlichen Dachrahmen (15) gefügt ist und das Dachblech-Vordersegment (9) in der Fahrzeug-Zusatzausstattung (Z) mittels einer Zusatz-Fügetechnik (P) an den seitlichen Dachrahmen (15) gefügt ist, wobei das Dachblech-Vordersegment (9) sowohl für den Verbau in der Fahrzeug-Basisausstattung (B) als auch für den Verbau in der Fahrzeug-Zusatzausstattung (Z) ausbildbar ist, und dass das Vordersegment (9) für den Verbau in der Fahrzeug-Basisausstattung (B) mit einer Basis-Anschlusskontur (33) zur Anbindung an den seitlichen Dachrahmen (15) mittels der Basis-Fügetechnik (L) durch einen Basis-Prozessschritt (I) ausgebildet ist, und dass das Vordersegment (9) für den Verbau in der Fahrzeug-Zusatzausstattung (Z) mit einer Zusatz-Anschlusskontur (42) zur Anbindung an den seitlichen Dachrahmen (15) mittels der Zusatz-Fügetechnik (P) durch einen Zusatz-Prozessschritt (II) ausgebildet ist.

2. Verfahren nach Anspruch 1, **dadurch gekennzeichnet, dass** der seitliche Dachrahmen (15) ein Hohlprofilträger ist, der aus schalenförmigen Blech-Seitenteilen (17, 19) gebildet ist, deren Randflansche (21) zu einer Flanschverbindung (23) zusammengefügt sind, an der das Dachblech-Vordersegment (9) anbindbar ist.

3. Verfahren nach einem der vorhergehenden Ansprüche, **dadurch gekennzeichnet, dass** das Vordersegment (9) in der Fahrzeugquerrichtung (y) in eine abgewinkelte Seitenflanke (27) übergeht, an die sich an einer Übergangskante (29) nach fahrzeugaußen ein Randflansch (31) anschließt, und dass der Randflansch (31) des Vordersegments (9) entweder die Basis-Anschlusskontur (33) oder die Zusatz-Anschlusskontur (42) bildet, die mittels der Basis-Fügetechnik (L) oder der Zusatz-Fügetechnik (P) auf einer insbesondere ebenflächigen, im Wesentlichen horizontalen Anbindungsfläche (25) der Flanschverbindung (23) des seitlichen Dachrahmens (15) befestigt ist.

4. Verfahren nach Anspruch 3, **dadurch gekennzeichnet, dass** die Basis-Fügetechnik (L) ein Laserschweißen -oder löten ist, und dass zur Bildung der Basis-Anschlusskontur (33) der Vordersegment-Randflansch (9) schräggestellt ist, und zwar unter Bildung eines im Querschnitt keilförmigen Hohlraums (35) zwischen der trägerseitigen Flanschverbindung (23) und dem Vordersegment-Randflansch (9), dessen Raumhöhe bevorzugt nach fahrzeuginnen ansteigt, so dass der Randflansch (31) lediglich mit seiner fahrzeugäußeren Randkante (37) in Laserschweiß- oder -lötverbindung (L) mit der trägerseitigen Flanschverbindung (23) ist.

5. Verfahren nach Anspruch 3, **dadurch gekennzeichnet, dass** die Zusatz-Fügetechnik (P) ein Punktschweißen ist, und dass zur Bildung der Zusatz-Anschlusskontur (42) der Randflansch (31) des Vordersegments (9) für eine vollflächige Anlage parallel zur Anbindungsfläche (25) der trägerseitigen Flanschverbindung (23) ausgerichtet ist.

6. Verfahren nach Anspruch 5, **dadurch gekennzeichnet, dass** die Basis-Anschlusskontur (33) und die Zusatz-Anschlusskontur (42) gemeinsam im Randflansch (31) des Vordersegments (9) ausgebildet sind.

7. Verfahren nach Anspruch 1, **dadurch gekennzeichnet, dass** das gemeinsame Blechteil (43) für den Verbau in der Fahrzeug-Basisausstattung (B) einer Basis-Formgebung (I) unterworfen wird, in der die Basis-Anschlusskontur (33) des Vordersegments (9) ausgebildet wird.

8. Verfahren nach Anspruch 1, **dadurch gekennzeichnet, dass** das gemeinsame Blechteil (43) für den Verbau in der Fahrzeug-Zusatzausstattung (Z) einer Zusatz-Formgebung (II) unterworfen wird, in der die Zusatz-Anschlusskontur (42) des Vordersegments (9) ausgebildet wird.

9. Verfahren nach Anspruch 8, **dadurch gekennzeichnet, dass** die Zusatz-Formgebung (II) in einer Prozessabfolge der Basis-Formgebung (I) zeitlich nachgeschaltet sind.

## Claims

1. Method for producing a plurality of structural variants of a body structure for a two-track vehicle, with at least one lateral roof frame (15) laterally bounding a roof sheet (5) in the transverse direction (y) of the vehicle, which roof sheet (5), in a basic vehicle configuration (B), has at least one roof-sheet segment (9) at the front in the longitudinal direction (x) of the vehicle, and, in an additional vehicle configuration (Z), additionally has at least one further roof-sheet segment (11, 13, 39) rearwardly adjoining said front roof-sheet segment in the longitudinal direction (x) of the vehicle, wherein, for the manufacturing of the front roof-sheet segment (9) for the basic vehicle configuration (B) and the front roof-sheet segment (9) for the additional vehicle configuration (Z), a common sheet-metal part (43) is provided which, in dual use, is used for the basic vehicle configuration (B) or for the additional vehicle configuration (Z) as required, **characterized in that** the front roof-sheet segment (9) in the basic vehicle configuration (B) is joined to the lateral roof frame (15) by means of a basic joining technique (L), and the front roof-sheet segment (9) in the additional vehicle configuration (Z) is joined to the lateral roof frame (15) by means of an additional joining technique (P), wherein the front roof-sheet segment (9) can be designed both for installation in the basic vehicle configuration (B) and for installation in the additional vehicle configuration (Z), and **in that** the front segment (9) for installation in the basic vehicle configuration (B) is designed with a basic connection contour (33) for connection to the lateral roof frame (15) by means of the basic joining technique (L) by a basic process step (I), and **in that** the front segment (9) for installation in the additional vehicle configuration (Z) is designed with an additional connection contour (42) for connection to the lateral roof frame (15) by means of the additional joining technique (P) by an additional process step (II).

2. Method according to Claim 1, **characterized in that** the lateral roof frame (15) is a hollow profile carrier which is formed from shell-shaped sheet-metal side parts (17, 19), the border flanges (21) of which are joined together to form a flange connection (23) to which the front roof-sheet segment (9) is connectable.

3. Method according to either of the preceding claims, **characterized in that** the front segment (9) merges in the transverse direction (y) of the vehicle into an angled side flank (27) which is adjoined at a transition edge (29) to the outside of the vehicle by a border flange (31), and **in that** the border flange (31) of the front segment (9) forms either the basic connection contour (33) or the additional connection contour (42), which is fastened by means of the basic joining technique (L) or the additional joining technique (P) to an in particular planar, substantially horizontal connecting surface (25) of the flange connection (23) of the lateral roof frame (15).

4. Method according to Claim 3, **characterized in that** the basic joining technique (L) is laser welding or soldering, and **in that**, in order to form the basic connection contour (33), the front-segment border flange (9) is inclined, specifically with the formation of a cross-sectionally wedge-shaped cavity (35) between the carrier-side flange connection (23) and the front-segment border flange (9), the spatial height of which cavity preferably rises towards the inside of the vehicle, and therefore the border flange (31) is in a laser welding or soldering connection (L) to the carrier-side flange connection (23) only with its vehicle-outer border edge (37).

5. Method according to Claim 3, **characterized in that** the additional joining technique (P) is spot welding, and **in that**, in order to form the additional connection contour (42), the border flange (31) of the front segment (9) is oriented parallel to the connection surface (25) of the carrier-side flange connection (23) for contact over the full surface area.

6. Method according to Claim 5, **characterized in that** the basic connection contour (33) and the additional connection contour (42) are formed jointly in the border flange (31) of the front segment (9).

7. Method according to Claim 1, **characterized in that** the common sheet-metal part (43) for installation in the basic vehicle configuration (B) is subjected to a basic shaping (I) in which the basic connection contour (33) of the front segment (9) is formed.

8. Method according to Claim 1, **characterized in that** the common sheet-metal part (43) for installation in the additional vehicle configuration (Z) is subjected to an additional shaping (II) in which the additional connection contour (42) of the front segment (9) is formed.

9. Method according to Claim 8, **characterized in that** the additional shaping (II) follows the basic shaping (I) in time in a process sequence.

## Revendications

1. Procédé de fabrication d'une pluralité de variantes constructives d'une structure de carrosserie pour un véhicule à deux voies, comprenant au moins un cadre de toit latéral (15) limitant latéralement une tôle de toit (5) dans la direction transversale du véhicule (y), laquelle tôle de toit (5) présente, dans un équipement de base du véhicule (B), au moins un segment de tôle de toit avant (9) dans la direction longitudinale du véhicule (x), et dans un équipement supplémentaire du véhicule (Z), en outre au moins un segment de tôle de toit supplémentaire (11, 13 39) se raccordant vers l'arrière à celui-ci dans la direction longitudinale du véhicule (x), pour la fabrication du segment avant de tôle de toit (9) pour l'équipement de base du véhicule (B) et du segment avant de tôle le toit (9) pour l'équipement supplémentaire de véhicule (Z), une partie de tôle commune (43) étant stockée, laquelle est utilisée pour un double usage au besoin pour l'équipement de base de véhicule (B) ou pour l'équipement supplémentaire de véhicule (Z), **caractérisé en ce que** le segment avant de tôle de toit (9), dans l'équipement de base du véhicule (B), est assemblé au cadre de toit latéral (15) au moyen d'une technique d'assemblage de base (L) et le segment avant de tôle de toit (9), dans l'équipement supplémentaire de véhicule (Z), est assemblé au cadre de toit latéral (15) au moyen d'une technique d'assemblage supplémentaire (P), le segment avant de tôle de toit (9) pouvant être réalisé à la fois pour le montage dans l'équipement de base de véhicule (B) ainsi que pour le montage dans l'équipement supplémentaire de véhicule (Z), et que le segment avant (9), pour le montage dans l'équipement de base du véhicule (B), est réalisé avec un contour de raccordement de base (33) pour le raccordement au cadre de toit latéral (15) au moyen de la technique d'assemblage de base (L) par une étape de processus de base (I), et que le segment avant (9), pour le montage dans l'équipement supplémentaire de véhicule (Z), est réalisé avec un contour de raccordement supplémentaire (42) pour le raccordement au cadre de toit latéral (15) au moyen de la technique d'assemblage supplémentaire (P) par une étape de processus supplémentaire (II).

2. Procédé selon la revendication 1, **caractérisé en ce que** le cadre de toit latéral (15) est un support de profilé creux qui est formé à partir de parties de tôle latérales en forme de coque (17, 19), dont les brides de bord (21) sont assemblées pour former un assemblage à bride (23), auquel peut être raccordé le segment avant de tôle de toit (9).

3. Procédé selon l'une quelconque des revendications précédentes, **caractérisé en ce que** le segment avant (9) se prolonge dans la direction transversale du véhicule (y) par un flanc latéral coudé (27) auquel se raccorde, au niveau d'une arête de transition (29), vers l'extérieur du véhicule, une bride de bord (31), et **en ce que** la bride de bord (31) du segment avant (9) forme soit le contour de raccordement de base (33) soit le contour de raccordement supplémentaire (42) qui est fixé au moyen de la technique d'assemblage de base (L) ou de la technique d'assemblage supplémentaire (P) sur une surface de liaison essentiellement horizontale (25), notamment plane, de l'assemblage à bride (23) du cadre de toit latéral (15).

4. Procédé selon la revendication 3, **caractérisé en ce que** la technique d'assemblage de base (L) est un soudage ou un brasage au laser, et **en ce que** pour former le contour de raccordement de base (33), la bride de bord du segment avant (9) est placée en biais, à savoir en formant une cavité (35) de section transversale en forme de coin, entre l'assemblage à bride du côté du support (23) et la bride de bord de segment avant (9), dont la hauteur spatiale augmente de préférence vers l'intérieur du véhicule de telle sorte que la bride de bord (31), seulement avec son arête de bord à l'extérieur du véhicule (37), soit en liaison soudée ou brasée par laser (L) avec la liaison à bride du côté du support (23).

5. Procédé selon la revendication 3, **caractérisé en ce que** la technique d'assemblage supplémentaire (P) est un soudage ponctuel et **en ce que** pour former le contour de raccordement supplémentaire (42), la bride de bord (31) du segment avant (9) est orientée pour une application sur toute la surface parallèlement à la surface de liaison (25) de la liaison à bride du côté du support (23).

6. Procédé selon la revendication 5, **caractérisé en ce que** le contour de raccordement de base (33) et le contour de raccordement supplémentaire (42) sont réalisés en commun dans la bride de bord (31) du segment avant (9).

7. Procédé selon la revendication 1, **caractérisé en ce que** la partie en tôle commune (43) pour le montage dans l'équipement de base du véhicule (B) est soumise à un formage de base (I) dans lequel est réalisé le contour de raccordement de base (33) du segment avant (9).

8. Procédé selon la revendication 1, **caractérisé en ce que** la partie de tôle commune (43) pour le montage dans l'équipement supplémentaire du véhicule (Z) est soumise à un formage supplémentaire (II) dans lequel est réalisé le contour de raccordement supplémentaire (42) du segment avant (9).

9. Procédé selon la revendication 8, **caractérisé en ce que** le formage supplémentaire (II) est réalisé, dans un déroulement de processus, après le formage de base (I).
